# EUROPEAN PATENT APPLICATION

(11) **EP 4 767 804 A1**
(43) Date of publication of application: **01.07.2026**
(21) Application number: 25227790.0
(22) Date of filing: 30.12.2025
(51) Int. Cl.: A01C 1/04

(54) **BIODEGRADABLE GEOTEXTILE STRUCTURE FOR SEED GERMINATION**

(30) Priority: 30.12.2024 PT 2024119953
(71) Applicant: Oprimee - Innovation Design Engineering Solutions, Lda, 3405-155 Oliveira do Hospital (PT)
(72) Inventor: DOS SANTOS ALMEIDA NUNES, João Miguel, 3405-155 Oliveira Do Hospital (PT)
(74) Representative: Patentree

(57) **Abstract**

The present disclosure relates to a biodegradable geotextile structure for soil rehabilitation comprising a woven fabric structure of filament yarns of a natural fiber, at least a plant nutrient and plant seeds, wherein the nutrient and the plant seeds are trapped in the apertures of the woven mesh of the woven fabric structure. Furthermore, the present disclosure relates to a method for producing said biodegradable geotextile structure.

## Description

### TECHNICAL FIELD

The present disclosure falls within the domain of sustainable agricultural and environmental technologies, specifically focusing on biodegradable geotextiles for seed germination optimization. It addresses challenges in reforestation and soil recovery by combining biodegradable materials with controlled nutrient release systems, providing an eco-friendly solution for promoting healthy plant growth in degraded environments.

### BACKGROUND

The restoration of degraded soils and the establishment of vegetation in areas such as reforestation and ecosystem recovery have become key objectives in modern environmental management. One of the challenges faced in these efforts is optimizing seed germination and plant establishment, especially in areas where soil conditions are not favorable for plant growth.

Conventional methods typically rely on synthetic materials to protect seeds and promote their germination, but these materials can contribute to environmental pollution and do not always offer the necessary nutrients or long-term soil health benefits.

Biodegradable geotextiles have emerged as a promising alternative, providing a more sustainable solution for seed germination and plant establishment. However, while these materials are beneficial for soil erosion control and water retention, they often lack integrated nutrient release systems, which are essential for promoting seedling growth in the critical early stages. Current biodegradable geotextile solutions do not always optimize the conditions for seed germination, particularly in areas with nutrient-poor soils or harsh climates.

KR101415672B discloses a biodegradable vegetation mat for afforestation comprising a dense mesh formed of biodegradable natural threads, to which a seed sheet or seed sieving pipe is attached, and further comprising a stacked structure including a fiber layer and a biodegradable pocket mesh arranged on the seed sheet or dense mesh.

These facts are disclosed in order to illustrate the technical problem addressed by the present disclosure.

### GENERAL DESCRIPTION

The present disclosure relates to a biodegradable geotextile structure for soil rehabilitation, seed germination and early plant development, comprising: a woven textile structure of filament yarns of a natural fiber selected from the list consisting of: cotton fiber, kapok fiber, hemp fiber, and mixtures thereof; wherein the woven textile structure defines a plurality of mesh openings having a characteristic dimension from 1 to 8 mm; at least a nutrient selected from the list consisting of: nitrogen, phosphorus, potassium, and mixtures thereof; at least one plant seed; wherein the at least one plant seed and/or the nutrient is physically confined within said mesh openings, wherein the woven textile structure comprises a thickness from 0.8 to 3.5 mm and a grammage from 120 to 450 g/m², and wherein the biodegradable fibres are configured to undergo progressive biodegradation in soil, such that nutrient release occurs according to a biphasic profile, comprising an initial diffusion-controlled phase followed by a degradation-controlled phase.

In an embodiment, the at least one plant seed and the at least one nutrient are physically confined within the mesh openings of the woven textile structure by mechanical entrapment resulting from the geometry and dimensions of the mesh openings and from the fibrous architecture of the textile, without the use of chemical bonding, polymeric encapsulation, or coating of the seeds or nutrients.

In an embodiment, the woven textile structure comprises hydrophilic biodegradable filament yarns configured to absorb and retain water upon contact with soil moisture, thereby forming a localized aqueous microenvironment within the mesh openings and in the immediate vicinity of the confined seeds and nutrients.

In an embodiment, the structural configuration of the woven textile and the hydrophilic nature of the filament yarns cause nutrient release to occur according to a biphasic profile inherent to the structure, said profile comprising an initial diffusion-controlled phase governed primarily by diffusion and capillary transport within the hydrated fibrous matrix, followed by a degradation-controlled phase governed by the progressive biodegradation of the filament yarns and the associated increase in effective porosity and permeability of the textile structure.

Biodegradable refers to the ability of a material to undergo decomposition by biological activity in soil, resulting in a progressive reduction in mass and conversion into naturally occurring substances without the formation of persistent residues.

Geotextile structure refers to a permeable textile material intended for contact with soil and configured to perform functions including erosion control, soil stabilisation, moisture retention, seed support, and soil rehabilitation.

Woven textile fabric refers to a fabric formed by interlacing filament yarns in at least two directions so as to define a mechanically stable mesh having apertures between intersecting yarns.

Filament yarns refer to continuous or substantially continuous fibres, optionally twisted or bundled, suitable for weaving into a textile fabric.

Natural fibre refers to a fibre derived from plant sources, including cotton, kapok, hemp, or mixtures thereof.

Mesh openings refer to the open spaces formed between intersecting filament yarns of the woven textile fabric, the openings permitting passage of water, air, and soil particles while retaining seeds and nutrients.

Opening size refers to the characteristic minimum dimension of a mesh opening measured between adjacent filament yarns.

Nutrient refers to a compound containing plant-essential elements selected from nitrogen, phosphorus, potassium, or combinations thereof, in a form suitable for uptake by plants.

Plant seed refers to a viable or non-viable propagule of a plant species capable of germination under suitable environmental conditions.

Physical confinement refers to the retention of seeds and nutrients within the mesh openings of the woven textile fabric by mechanical entrapment, frictional interaction, or localisation within the textile structure, without chemical bonding.

Grammage refers to the mass per unit area of the geotextile structure, expressed in grams per square metre (g/m²).

Thickness refers to the distance between opposing outer surfaces of the geotextile structure measured in a direction perpendicular to the plane of the fabric.

Progressive biodegradation refers to the gradual reduction in mass and structural integrity of the geotextile structure over time under soil exposure conditions.

Controlled nutrient release refers to the gradual release of nutrients from the geotextile structure into the surrounding soil as a consequence of diffusion and/or biodegradation of the natural fibre yarns.

Soil rehabilitation refers to the improvement of soil structure, fertility, and biological activity to support plant establishment and growth.

In an embodiment for better results, the at least a nutrient and the plant seeds are trapped in the apertures of the woven mesh of the woven fabric structure.

Surprisingly, the biodegradable geotextile structure of the present disclosure provides a controlled release of essential nutrients, combined with the ability to support seed germination. By combining biodegradability with an effective nutrient delivery system, this biodegradable geotextile structure can significantly enhance reforestation and soil rehabilitation efforts, offering a more sustainable and effective approach for ecological restoration.

The biodegradable geotextile structure of the present disclosure provides the following advantages:
Sustainability: Made from biodegradable materials, the geotextile minimizes environmental impact.
Efficiency: Combines soil stabilization, nutrient enrichment, and vegetation establishment in a single product.
Ease of Use: Simplifies soil rehabilitation by providing a pre-packaged, ready-to-use solution.
Customization: Allows for tailoring the fiber, nutrient, and seed composition to specific soil conditions and rehabilitation goals.

The present disclosure relates to a biodegradable geotextile structure designed for soil rehabilitation, seed germination, and early plant development. The structure comprises a woven textile fabric formed from biodegradable natural fibre filament yarns and defining mesh openings configured to physically confine plant seeds and nutrients. The geotextile has a specific grammage and thickness, providing mechanical stability during installation while maintaining permeability to water and air.

Surprisingly, it has been found that the combined use of a woven natural-fibre geotextile architecture with the physical confinement of both plant seeds and nutrients within the mesh openings enables reliable seed retention and nutrient availability without the need for synthetic binders or polymeric coatings. As the natural fibre yarns progressively biodegrade in soil, nutrients are released in a controlled manner while the textile structure gradually integrates into the soil matrix.

The disclosed geotextile structure therefore provides a multifunctional system that simultaneously supports erosion control, seed positioning, nutrient delivery, and soil rehabilitation, while remaining fully biodegradable and compatible with natural soil ecosystems.

An aspect of the present disclosure relates to a biodegradable geotextile structure for soil rehabilitation comprising:
a woven fabric structure of filament yarns of a natural fiber selected from the list consisting of cotton fiber, kapok fiber, hemp fiber, and mixtures thereof;
at least a nutrient selected from the list consisting of: nitrogen, phosphorus, potassium, and
mixtures thereof;
plant seeds;
wherein the at least a nutrient and the plant seeds are trapped in the apertures of the woven mesh of the woven fabric structure.

In an embodiment for better results, the plant seeds are selected from the group consisting of: Quercus spp., Pinus spp., Betula spp, and mixtures thereof.

In an embodiment for better results, the apertures of the woven mesh of the woven fabric structure ranges from 0.1 mm to 50 mm.

In an embodiment for better results, the grammage of the geotextile ranges from 50 to 1500 g/m².

In an embodiment for better results, the thickness of the geotextile ranges from 0.1 µm to 10 mm

In an embodiment, the nutrients of the biodegradable geotextile structure are associated with biodegradable ionic retention components selected from a list consisting of: lignin, tannins, natural clays, zeolites or biochar, and their mixtures thereof.

In an embodiment, the biodegradable geotextile structure comprises a woven textile fabric defining a plurality of mesh openings having an opening size of from 1 to 8 mm, preferably from 2 to 6 mm and more preferably from 3 to 5 mm, such mesh openings being configured to geometrically confine at least one plant seed and at least one nutrient in close proximity to the soil surface after installation.

In an embodiment, the woven textile structure has a grammage of from 120 to 450 g/m² and a thickness of from 0.8 to 3.5 mm, preferably a grammage of from 180 to 380 g/m² and a thickness of from 1.0 to 2.5 mm, thereby providing sufficient mechanical stability during handling and installation while allowing progressive biodegradation once in contact with soil.

In an embodiment, the woven textile structure is formed from filament yarns comprising natural fibers selected from cotton fiber, kapok fiber, hemp fiber, or mixtures thereof, said fibers being biodegradable and configured to undergo gradual degradation under agricultural soil conditions.

In an embodiment, the biodegradable geotextile structure comprises at least one nutrient selected from nitrogen, phosphorus, potassium, or mixtures thereof, wherein the nitrogen component may comprise nitrate, ammonium, urea, or combinations thereof, optionally in combination with phosphorus- and/or potassium-containing compounds.

In an embodiment, the at least one nutrient is present in an amount of from 8 to 20 g/m², preferably from 10 to 14 g/m², based on the surface area of the geotextile structure, such loading being selected to support seed germination and early plant development while limiting nutrient losses by leaching.

In an embodiment, the biodegradable geotextile structure comprises at least one plant seed selected from grasses, legumes, cover crops, or mixtures thereof, suitable for soil stabilization, revegetation, erosion control, or agricultural establishment.

In an embodiment, the woven textile structure is configured to retain surface moisture by capillary action, thereby increasing water availability in the immediate vicinity of the confined seeds during the germination phase and contributing to improved emergence uniformity.

In an embodiment, the biodegradable fibers of the woven textile structure are configured to undergo progressive biodegradation in soil, such that nutrient release occurs according to a biphasic release profile comprising an initial diffusion-controlled phase followed by a degradation-controlled phase.

In an embodiment, the biphasic nutrient release profile is characterized in that the initial diffusion-controlled phase results in a reduced nutrient release within the first 24 hours after installation, preferably releasing less than 15% of the total nutrient content under typical agricultural soil conditions.

In an embodiment, the degradation-controlled phase results in a progressive increase in nutrient release correlated with loss of structural integrity of the woven textile structure, such that at least 60% of the total nutrient content is released within approximately 30 days and at least 85% within approximately 60 days after application in soil.

In an embodiment, the woven textile structure exhibits a controlled reduction in tensile strength during soil exposure, and nutrient release is positively correlated with the degradation of the structure, as evidenced by a correlation coefficient greater than 0.85 between cumulative nutrient release and mass loss of the geotextile under controlled soil incubation conditions.

In an embodiment, the biodegradable geotextile structure is configured to reduce nutrient losses by leaching by at least 30% compared to an equivalent application of granular fertilizer applied without a geotextile carrier.

In an embodiment, the biodegradable geotextile structure exhibits soil-adaptive nutrient release behavior, with a faster initial release in sandy soils having lower cation exchange capacity and a more gradual release in clay-rich soils having higher water retention and adsorption capacity.

In an embodiment, the biodegradable geotextile structure is configured to improve at least one agronomic parameter selected from germination rate, emergence homogeneity, surface water retention, and early plant survival, relative to a biodegradable geotextile structure lacking integrated nutrients.

Another aspect of the present disclosure relates to a geotextile mat, sheet or roll comprising the biodegradable geotextile structure according to any of the previous claims.

Another aspect of the present disclosure relates to a method for producing a biodegradable geotextile structure comprising the steps of:
weaving a fabric structure of filament yarns of natural fibers selected from the list consisting of: cotton fiber, kapok fiber, hemp fiber, and mixtures thereof;
treating the woven fabric structure with a suspension comprising a nutrient selected from the list consisting of: nitrogen, phosphorus, potassium, and mixtures thereof, and plant seeds;
drying the treated woven fabric structure to trap the at least a nutrient and the plant seeds within the mesh apertures of the woven fabric structure.

### BRIEF DESCRIPTION OF THE DRAWINGS

The following figures provide preferred embodiments for illustrating the disclosure and should not be seen as limiting the scope of invention.

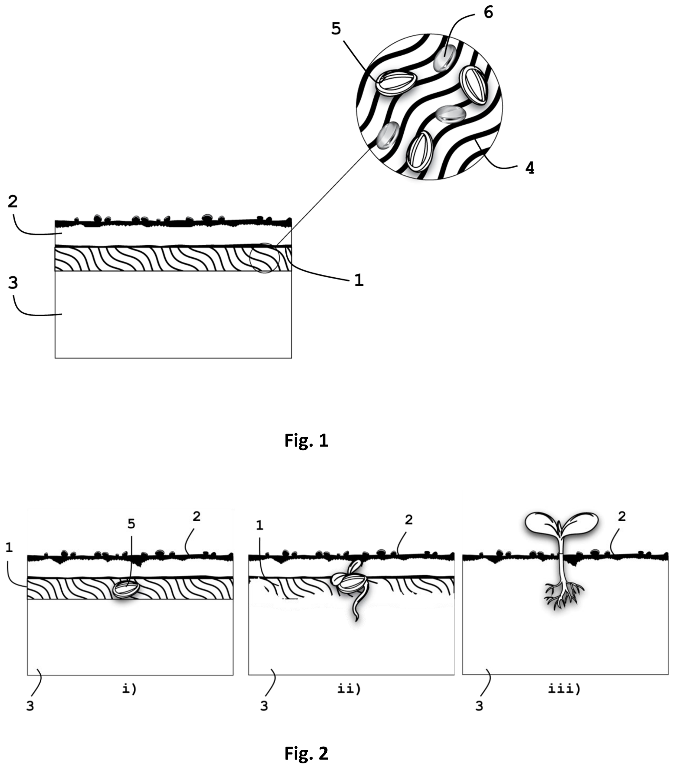

**Figure 1****:** General view of the biodegradable geotextile structure(1) designed to optimize the seed germination process, which should be placed above the soil level (2), at the root growth zone of the plants (3). The figure also shows the composition of the biodegradable geotextile mat (1), made from natural fibres (4), seeds (5), and essential nutrients (6).
**Figure 2****:** Illustration of the germination process over time. Initially, it is expected that the geotextile structure be placed below the soil level (2), at the root growth zone of the plants (3) (i). Subsequently, the biodegradable geotextile structure (1) begins to degrade, and plant growth starts (ii). Finally, as time passes, the biodegradable geotextile structure (1) completely degrades. However, the degradation time of the biodegradable geotextile mat (1) ensures that the plant grows healthily (iii).

### DETAILED DESCRIPTION

The present disclosure relates to an innovative biodegradable geotextile structure specifically designed to optimize the seed germination process in diverse environments. A biodegradable geotextile structure for soil rehabilitation, seed germination, and early plant development is disclosed. The structure comprises a woven textile fabric formed from filament yarns of biodegradable natural fibres and defining mesh openings configured to physically confine plant seeds and plant nutrients. The geotextile has a defined grammage and thickness providing mechanical stability while remaining permeable to water and air. During use, the natural fibre yarns undergo progressive biodegradation in soil, enabling controlled release of nutrients and gradual integration of the structure into the soil. The geotextile provides combined erosion control, seed support, and nutrient delivery without the need for synthetic binders or non-biodegradable components.

In one embodiment, the biodegradable geotextile structure acts as a physical support, ensuring direct contact between the seeds and the soil, thereby creating an ideal environment for seed development.

It is formulated to provide a balanced combination of essential nutrients necessary for the initial growth of plants. It comprises key nutrients, including nitrogen, which promotes leaf growth and chlorophyll production; phosphorus, which supports root development and flowering; and potassium, which enhances plant resistance to diseases and environmental stressors, such as drought and temperature fluctuations. These nutrients are released in a controlled manner, ensuring that plants have access to them during critical phases of germination and early development.

The present disclosure relates to an innovative biodegradable geotextile structure specifically designed to optimize the seed germination process in diverse environments. As the geotextile structure biodegrades, the nutrients are gradually released into the soil, fostering a healthy environment that supports continued plant growth.

Another important feature of this geotextile structure is its biodegradability. Made from natural materials, the geotextile structure decomposes once it has fulfilled its purpose, reducing environmental impact and contributing to the sustainability of the ecosystem.

The geotextile of the present disclosure is particularly valuable in reforestation initiatives, where restoring degraded areas is essential to re-establishing biodiversity and ecosystem functionality. It offers a practical and efficient solution to promote healthy plant growth, helping to establish a robust flora that can eventually support local fauna and contribute to environmental stabilization.

Thus, the geotextile structure of the present disclosure not only facilitates seed germination and early plant growth but also represents a significant advancement in ecological restoration practices, combining agronomic efficiency with environmental responsibility. The adoption of this biodegradable geotextile structure will revolutionize traditional reforestation methods, promoting a greener and more sustainable future.

The biodegradable geotextile structure was designed to optimize the seed germination process, wherein it provides direct contact between seeds and the soil, creating an ideal environment for seedling development and ensuring that essential nutrients are made available to plants during their early stages of growth. It is formulated to provide a controlled release of essential nutrients, including nitrogen, phosphorus, and potassium, to support the initial growth of plants, such that nitrogen promotes leaf growth and chlorophyll production, phosphorus supports root development and flowering, and potassium enhances plant resistance to diseases and environmental stressors.

Its nutrients are released in a controlled manner, ensuring that plants have access to these nutrients during critical phases of germination and early development.

The biodegradable geotextile is made from natural fibers, and as it biodegrades, it gradually releases the essential nutrients into the soil, promoting continuous plant development while reducing environmental impact.

The biodegradable geotextile is designed to be placed slightly below the soil level, at the root growth zone of the plants, to facilitate the proper development of the root system and ensure optimal germination conditions.

The biodegradable geotextile structure allows a controlled release system of nutrients designed to ensure that plants continue to receive nutrients throughout the early stages of growth, while the geotextile structure gradually biodegrades, providing a sustainable and eco-friendly solution for reforestation and soil rehabilitation.

The biodegradable geotextile structure of the present disclosure is particularly suitable for reforestation and ecological restoration initiatives, where the restoration of degraded areas and the promotion of biodiversity are essential.

In one implementation, the geotextile mat comprises a biodegradable fibrous or filamentary structure forming openings or pockets configured to geometrically confine seeds and nutrient sources in close proximity to the soil surface. During use, the structure retains moisture by capillary action and modulates nutrient delivery through a biphasic release mechanism. A first phase is dominated by hydration-driven diffusion and capillarity and is characterized by a reduced initial burst. A second phase is governed by progressive biodegradation of the fibrous structure, which increases effective permeability and contact area, thereby sustaining nutrient availability during early plant development.

Figure 1 represents cumulative nutrient release as a function of time for the the geotextile mat of the present disclosure compared with a conventional biodegradable geotextile and a conventional granular fertilizer application. The disclosure geotextile mat exhibits a controlled initial release phase followed by a progressive release associated with material degradation, thereby reducing early leaching losses. The overall concept of the biodegradable geotextile structure is schematically represented in **Fig. 1**, where the application of a biodegradable geotextile structure **(1)** for optimizing the germination process in various contexts can be observed. The biodegradable geotextile structure **(1)** should be placed slightly below the soil level **(2),** remaining buried at the root growth zone of the plants **(3).**

The composition of the biodegradable geotextile structure **(1)** distinguishes it from other available options, as it contains natural fibres **(4),** seeds **(5),** and essential nutrients **(6).** The biodegradable geotextile structure **(1)** to optimize the seed germination process is characterized by its formulation, which provides a balanced combination of essential nutrients **(6)** necessary for the initial growth of plants, that includes nitrogen, which promotes leaf growth and chlorophyll production; phosphorus, which supports root development and flowering; and potassium, which enhances plant resistance to diseases and environmental stressors, such as drought and temperature fluctuations.

Figure 2 illustrates the correlation between geotextile mass loss and cumulative nutrient release over time. The observed biphasic profile includes an initial diffusion-dominated phase followed by a phase governed by progressive degradation of the fibrous structure. Fig. 2 illustrates the development and growth of plants when the biodegradable geotextile structure (1) is applied. It acts as physical support, ensuring direct contact between the seeds and the soil, thereby creating an ideal environment for seed development (i). As the biodegradable geotextile structure (1) biodegrades, the essential nutrients (6) are gradually released into the soil (2), fostering a healthy environment that supports continued plant growth (ii). Another important feature of the biodegradable geotextile structure (1) is its biodegradability. Made from natural fibres (4), the biodegradable geotextile structure (1) decomposes once it has fulfilled its purpose, reducing environmental impact and contributing to the sustainability of the ecosystem. The degradation period of the biodegradable geotextile structure (1) ensures that the plant can grow healthily and develop its root system to survive once the essential nutrients (6) from the geotextile structure are depleted (iii).The biodegradable geotextile structure of the present disclosure is particularly valuable in reforestation initiatives, where restoring degraded areas is essential to re-establish biodiversity and ecosystem functionality. It offers a practical and efficient solution to promote healthy plant growth, helping to establish a robust flora that can eventually support local fauna and contribute to environmental stabilization.

Thus, the biodegradable geotextile structure of the present disclosure not only facilitates seed germination and early plant growth but also represents a significant advancement in ecological restoration practices, combining agronomic efficiency with environmental responsibility. The adoption of this biodegradable geotextile structure could revolutionize traditional reforestation methods, promoting a greener and more sustainable future.

In an embodiment, the biodegradable geotextile structure provides an integrated and synergistic solution for seed germination, early plant development and soil rehabilitation. The technical effects obtained by the disclosed technology result from the combined action of the textile structure, the physical confinement of seeds and nutrients within the mesh openings, the hydrophilic and capillary properties of the fibrous matrix, and the progressive biodegradation of the material. This combination creates a controlled microenvironment at the soil surface or within the root growth zone, which is not achievable by conventional geotextiles or by the separate application of seeds and fertilizers.

The release of nutrients from the biodegradable geotextile structure follows a controlled, biphasic kinetic profile. In an initial phase, nutrient release is governed predominantly by diffusion and capillary transport mechanisms. Upon wetting of the structure, the biodegradable fibers absorb water and swell, forming a continuous aqueous film within the fibrous network. Nutrients confined within the mesh openings dissolve progressively into this retained water and are transported at a limited rate by diffusion and capillary flow. This initial regime allows a gradual availability of nutrients during the critical germination and emergence phase, while avoiding an excessive initial release that would otherwise lead to nutrient losses by leaching or osmotic stress to the seeds.

As the exposure time in soil increases, the release mechanism transitions to a second phase governed by the progressive biodegradation of the textile structure. Microbial activity and hydrolytic processes gradually reduce the mechanical integrity of the fibres, leading to an increase in effective porosity, permeability and exposed surface area of the matrix. This controlled structural degradation increases the fraction of nutrients accessible to the soil solution and prolongs the release over time, thereby sustaining nutrient availability during early root development and plant establishment. Experimental observations demonstrate that this transition between release regimes correlates with measurable indicators of material degradation, including mass loss and reduction of tensile strength.

Controlled laboratory and soil-based release experiments show that the cumulative release profiles obtained with the biodegradable geotextile structure can be described, in the early phase, by diffusion-based kinetic models commonly applied to porous matrices, while the later phase is better correlated with degradation-dependent release. Objective metrics such as the time required to release 10%, 50% and 90% of the incorporated nutrients, the initial release rate during the first days after application, and the average release flux over defined time intervals confirm the presence of a moderated initial release followed by a sustained release tail. This behaviour contrasts with conventional fertilizer applications, which typically exhibit a pronounced initial burst followed by rapid depletion.

A direct correlation has been established between the degradation of the geotextile structure and nutrient release. Measurements of mass loss and retention of mechanical strength over time show that nutrient liberation increases progressively as the material loses structural integrity. In particular, once a moderate level of degradation is reached, corresponding to a partial loss of tensile resistance, the release rate increases without compromising the functional role of the mat during the germination phase. This controlled coupling between degradation and nutrient availability ensures that nutrients remain localized within the root zone during the period of highest plant demand.

Comparative experiments carried out under controlled laboratory conditions and under simulated and real field conditions further demonstrate the technical advantages of the disclosed technology relative to the prior art. When compared with biodegradable geotextiles lacking integrated nutrients and with conventional fertilization applied separately, the biodegradable geotextile structure exhibits a significantly reduced initial nutrient loss by leaching, particularly under conditions of intense precipitation or in soils with low cation exchange capacity. At the same time, the total amount of nutrients available to the plants over the first weeks after application is maintained or increased, resulting in improved nutrient use efficiency.

Agronomic performance tests confirm that the controlled release and localized confinement of nutrients lead to higher germination rates and a more homogeneous emergence of seedlings. The reduced variability in emergence, as quantified by a lower coefficient of variation, demonstrates that the mat creates a more uniform microenvironment across the treated area. In addition to enhanced germination, plants grown with the geotextile mat exhibit improved early vigour, characterized by increased above-ground biomass and more developed root systems within the first weeks after installation. These effects are attributed to the sustained availability of nutrients in close proximity to the seeds, combined with improved moisture retention at the soil surface.

The disclosed technology further provides measurable benefits in the context of degraded or erosion-prone soils. The biodegradable geotextile structure improves surface moisture retention, enhances soil structural stability and reduces surface erosion under simulated rainfall conditions. The rapid establishment of vegetation promoted by the mat contributes to increased soil coverage and reduced sediment transport. In parallel, indicators of soil biological activity show an improvement over untreated soils and over soils treated with conventional geotextiles and fertilization, demonstrating a positive contribution to soil functional recovery.

Taken together, these results demonstrate that the technical effects achieved by the disclosed technology are not the result of a mere juxtaposition of known elements, but arise from the specific structural and functional integration of the biodegradable textile matrix with confined seeds and nutrients. The controlled biphasic release mechanism, the correlation between degradation and nutrient availability, the reduction of nutrient losses by leaching, and the demonstrated improvements in germination, early plant development and soil functionality constitute a set of technical effects that are not predictable from the prior art. The described biodegradable geotextile structure therefore provides a technically effective and environmentally compatible solution for agriculture, reforestation and soil rehabilitation applications.

In an embodiment, the disclosed technology relates to a biodegradable geotextile structure intended for promoting seed germination and early plant development. In an embodiment, the structure comprises a woven textile structure formed from biodegradable fibers, the weaving of which defines a plurality of mesh openings distributed over the surface of the structure. The biodegradable geotextile structure is configured such that these openings physically confine both plant seeds and nutrients, thereby retaining the seeds and nutrients within the openings of the textile structure prior to and after installation on soil.

In an embodiment, the biodegradable geotextile structure may be produced using weaving techniques selected from plain weave, twill weave or leno weave constructions, with leno weave being particularly advantageous due to its ability to form stable and well-defined mesh openings. The density of the textile structure may be selected within a range of 4 to 14 yarns per centimetre in the warp direction and between 3 and 12 yarns per centimetre in the weft direction. These ranges allow the mat to achieve sufficient mechanical stability while maintaining permeability to water and air and enabling the formation of openings suitable for seed and nutrient confinement.

In an embodiment, the mesh openings of the woven structure may have characteristic dimensions comprised from 1 to 8 millimetres, preferably from 2 to 5 millimetres. Openings within these ranges allow the physical confinement of seeds and nutrients while permitting intimate contact with the underlying soil. This configuration creates localized micro-reservoirs that limit the displacement of seeds and nutrients during installation and under external forces such as rainfall, irrigation or surface runoff.

In an embodiment, the total thickness of the geotextile mat may be selected within a range from 0.8 to 3.5 millimetres. Within this range, the structure provides sufficient mechanical resistance for handling and installation while maintaining flexibility and adequate water absorption and retention properties.

In an embodiment, the biodegradable geotextile structure incorporates nutrients confined within the same mesh openings as the seeds. The total nutrient load incorporated into the structure may be comprised from 6 to 20 grams per square metre. This range provides adequate nutritional support for germination and early plant development while avoiding excessive concentrations that could negatively affect seed viability. The nutrients may comprise nitrogen, phosphorus and potassium, provided respectively in the form of urea, ammonium phosphates and potassium salts. These nutrient forms are compatible with agricultural use and may be selected to exhibit medium to controlled solubility in water.

In an embodiment, the nutrient formulations are selected such that the initial solubility is moderated, thereby reducing the initial release peak during the first days after application. As a result, the cumulative nutrient release after seven days may remain below 45 percent of the total incorporated nutrient load. After thirty days, the cumulative release may be comprised from 55 to 75 percent of the total incorporated nutrients, and after sixty days, the cumulative release may exceed 80 percent. These release profiles reflect a controlled and progressive nutrient delivery aligned with the nutritional requirements of developing seedlings.

The fibrous matrix of the structure exhibits water retention and capillary properties that allow it to absorb and retain moisture from precipitation or irrigation. This retained water promotes seed hydration and germination and provides a medium for the gradual dissolution and transport of nutrients. The capacity of the structure to retain water contributes to the formation of a favourable microenvironment in the immediate vicinity of the seeds, particularly during the critical emergence phase.

The biodegradable nature of the textile fibres results in a progressive degradation of the structure after installation in soil. This degradation occurs over time due to biological and environmental processes and leads to a gradual reduction in mechanical integrity. The structure is configured to maintain sufficient mechanical resistance during the initial germination phase, while progressively degrading thereafter. As a consequence, the release of nutrients from the structure follows a biphasic profile, wherein an initial phase is dominated by diffusion and capillary transport within the hydrated fibrous matrix, and a subsequent phase is governed by the progressive degradation of the textile structure, which increases permeability and exposed surface area.

The release profile may vary depending on the type of soil in which the structure is applied. In sandy soils, characterized by lower water retention and lower cation exchange capacity, nutrient release may occur more rapidly. In loamy soils, the release profile may be intermediate, while in clay soils, characterized by higher water retention and adsorption capacity, nutrient release may be more gradual. Notwithstanding these variations, the structure ensures that a controlled release profile is maintained in all cases, and that the mineral nutrient concentration in the soil remains stabilized for at least thirty days, independently of the soil type.

In an embodiment, the nutrients incorporated into the structure may be associated with biodegradable ionic retention components selected from lignin, tannins, natural clays, zeolites and biochar. In further embodiments, the nutrients may be partially or fully coated with a biodegradable layer acting as a diffusion barrier. These configurations reduce the downward mobility of nutrients in the soil and contribute to a reduction of nutrient losses by leaching. Under conditions of intensive precipitation, the mat may achieve a reduction of nutrient losses by leaching of at least 25 percent when compared with conventional fertilization techniques.

The combined effect of physical confinement, controlled nutrient release and moisture retention results in improved germination performance. Comparative evaluations demonstrate that the application of the structure leads to an increase in germination rate of at least 15 percent relative to seed application without a disclosed structure. In addition, the coefficient of variation of seedling emergence may be reduced by at least 30 percent relative to conventional techniques, resulting in a more homogeneous spatial distribution of emerging plants.

The controlled release of nutrients and the favourable moisture conditions further contribute to improved early plant development. In particular, the application of the structure results in increased above-ground dry biomass and increased root dry biomass during the first thirty days after application. The total root length may be increased by at least 15 percent relative to biodegradable geotextiles lacking integrated nutrients.

The biodegradable geotextile structure is particularly suitable for use in degraded soils. When applied to such soils, the structure promotes an increase in surface soil moisture, an improvement in soil structure and a reduction in erosion. In particular, the application of the structure may result in a reduction of transported sediment of at least 30 percent relative to untreated areas. These effects demonstrate that the structure acts not only as a support for germination and nutrient delivery, but also as an active element contributing to the functional recovery of degraded soils.

The described structural and functional features act synergistically to produce technical effects that are not predictable from the prior art. The integration of seeds and nutrients within defined mesh openings, combined with controlled biodegradation and moisture retention, results in a biodegradable geotextile structure that provides controlled nutrient release, improved germination and early development, and enhanced soil functionality across a wide range of agricultural, reforestation and environmental rehabilitation applications.

The technical effects of the geotextile mat of the present disclosure were evaluated by comparative laboratory and controlled field experiments. Unless otherwise stated, the initial nutrient loading was 12.0 ± 0.5 g/m² for all tested systems, and cumulative release is expressed as percent of the initially loaded nutrient mass. Data are provided as representative results suitable to demonstrate the functional mechanism and measurable technical effect.

**Table 1- Nutrient Release Kinetics Parameters**

| Parameter | Unit | Geotextile mat of the present disclosure | Conventional Biodegradable Geotextile | Conventional Granular Fertilizer |
|---|---|---|---|---|
| Initial nutrient loading | g/m² | 12.0 ± 0.5 | 12.0 ± 0.5 | 12.0 ± 0.5 |
| Release at 24 h | % | 8 ± 2 | 22 ± 4 | 35 ± 6 |
| Release at 7 days | % | 32 ± 5 | 48 ± 7 | 62 ± 8 |
| Release at 30 days | % | 68 ± 6 | 74 ± 6 | 85 ± 5 |
| Release at 60 days | % | 92 ± 4 | 95 ± 3 | 98 ± 2 |
| t50 (50% released) | days | 18 ± 2 | 11 ± 2 | 6 ± 1 |
| Initial rate (0-3 days) | mg·m⁻²·day⁻¹ | 120 ± 15 | 260 ± 30 | 410 ± 45 |

As shown in Table 1, the geotextile mat of the present disclosure provides a substantially reduced initial burst compared with the conventional biodegradable geotextile and granular fertilizer, while still achieving high cumulative release over longer times. The delayed t50 and lower initial release rate indicate a progressive delivery profile compatible with the critical germination phase and reduced susceptibility to early leaching losses.

**Table 2 - Kinetic Model Fitting and Parameters**

| Kinetic model | Parameter | Geotextile mat of the present disclosure | Prior Art |
|---|---|---|---|
| Higuchi | kH (day^{-1/2}) | 0.18 | 0.32 |
| Korsmeyer-Peppas | n | 0.62 | 0.41 |
| Korsmeyer-Peppas | k | 0.21 | 0.38 |
| Correlation coefficient (R²) | - | 0.97 | 0.89 |

The fitting results in Table 2 show improved correlation for the geotextile mat of the present disclosure, with an R² of 0.97 under the reported conditions. The Korsmeyer-Peppas exponent n greater than 0.5 is consistent with anomalous transport, attributable to combined aqueous diffusion and progressive degradation of the geotextile matrix, a mechanism not present in conventional systems where nutrient release is largely independent of the structural evolution of the carrier.

**Table 3 - Correlation Between Biodegradation and Nutrient Release**

| Time | Geotextile mass loss (%) | Tensile strength retention (%) | Cumulative release (%) |
|---|---|---|---|
| 7 days | 4 ± 1 | 92 ± 3 | 32 ± 5 |
| 14 days | 9 ± 2 | 81 ± 4 | 48 ± 6 |
| 30 days | 18 ± 3 | 63 ± 5 | 68 ± 6 |
| 60 days | 35 ± 5 | 38 ± 6 | 92 ± 4 |

Table 3 demonstrates that cumulative nutrient release increases in parallel with geotextile mass loss and the controlled reduction of tensile strength. Under these representative conditions, the correlation between mass loss and cumulative release is high, with a Pearson correlation coefficient r of 0.94, supporting intentional coupling between biodegradation and functional release.

**Table 4 - Comparative Agronomic Efficiency (Controlled Field Trial)**

| Indicator | Unit | Geotextile mat of the present disclosure | Conventional Geotextile | No Mat |
|---|---|---|---|---|
| Germination rate | % | 91 ± 4 | 72 ± 6 | 54 ± 7 |
| Emergence homogeneity (CV) | % | 12 | 26 | 41 |
| Surface water retention | % | +45 | +18 | 0 |
| Leaching losses (total N) | % | -52 | -18 | - |
| Survival after 30 days | % | 88 ± 5 | 65 ± 8 | 47 ± 9 |

In the controlled field trial summarized in Table 4, the geotextile mat of the present disclosure produced higher germination and survival and a markedly reduced emergence coefficient of variation, indicating more homogeneous establishment. The observed increase in surface water retention and the reduction in nutrient leaching losses are consistent with the combined effects of local confinement, capillary moisture retention, and the biphasic controlled release profile.

Known biodegradable geotextiles are primarily used for erosion control and surface water retention and do not integrate a functional controlled nutrient release system, nor do they ensure local confinement of nutrients in the immediate vicinity of seeds. Conventional slow-release fertilizers are typically applied separately and remain susceptible to displacement and leaching, do not guarantee continuous contact with seeds, and do not provide mechanical protection of the germination zone.

By contrast, the geotextile mat of the present disclosure integrates geometric confinement of seeds and nutrients within mesh openings, capillary moisture retention, and a controlled biphasic release profile correlated with biodegradation. This integrated combination yields a measurable reduction in nutrient leaching and produces higher, more homogeneous, and more stable germination that is not predictable from a mere juxtaposition of known geotextiles and fertilizers.

To demonstrate soil-adaptive behavior, nutrient release was evaluated in agricultural soils of different textures under representative base conditions of 20-25 °C, pH 6.5-7.2, moisture at approximately 70% of field capacity, and simulated rainfall of 10 mm/day during the first 7 days followed by 5 mm/day up to 60 days, with the mat applied at the surface in intimate contact with soil.

**Table 5 - Nutrient Release Kinetics by Soil Type (Agricultural Conditions)**

| Soil texture | Release 24 h (%) | Release 7 days (%) | Release 30 days (%) | Release 60 days (%) | t50 (days) | Initial rate 0-3 d (mg·m⁻²·day⁻¹) |
|---|---|---|---|---|---|---|
| Sandy (low CEC) | 10 ± 2 | 36 ± 5 | 72 ± 6 | 94 ± 4 | 16 ± 2 | 140 ± 20 |
| Loamy (medium CEC) | 8 ± 2 | 32 ± 5 | 68 ± 6 | 92 ± 4 | 18 ± 2 | 120 ± 15 |
| Clay (high CEC) | 6 ± 2 | 28 ± 4 | 62 ± 6 | 89 ± 5 | 21 ± 3 | 95 ± 15 |

As summarized in Table 5, sandy soil shows a slightly higher initial release, consistent with higher hydraulic pull and lower ionic adsorption, while clay soil dampens early release and extends t50 due to higher cation exchange capacity and water retention. The loamy soil exhibits intermediate behavior.

**Table 6 - Nutrient Leaching Losses (Direct Comparison with Prior Art)**

| Soil | System | Leaching 0-14 d (%) | Leaching 0-60 d (%) |
|---|---|---|---|
| Sandy | Invention (mat) | 9 ± 2 | 18 ± 4 |
| Sandy | Conventional granular fertilizer | 22 ± 5 | 35 ± 7 |
| Loamy | Invention (mat) | 7 ± 2 | 15 ± 4 |
| Loamy | Conventional granular fertilizer | 18 ± 4 | 28 ± 6 |
| Clay | Invention (mat) | 5 ± 2 | 12 ± 3 |
| Clay | Conventional granular fertilizer | 12 ± 4 | 20 ± 5 |

Table 6 shows that, across soil textures, the geotextile mat of the present disclosure reduces nutrient recovery in eluate or drainage compared with conventional granular fertilization, particularly during the first 14 days when leaching susceptibility is highest.

**Table 7 - Degradation of the Geotextile versus Nutrient Release in Agricultural Soil**

| Time | Mass loss (%) | Tensile strength retention (%) | Cumulative release (%) |
|---|---|---|---|
| 7 days | 4 ± 1 | 92 ± 3 | 28-36 (soil-dependent) |
| 14 days | 9 ± 2 | 81 ± 4 | 42-55 |
| 30 days | 18 ± 3 | 63 ± 5 | 62-75 |
| 60 days | 35 ± 5 | 38 ± 6 | 89-94 |

In Table 7, cumulative release is reported as an interval because it varies with soil texture as reflected in Table 5, while the biphasic mechanism remains consistent in all cases, with an initial diffusion and capillarity contribution followed by a degradation-governed late phase.

**Table 8 - Agronomic Indicators by Soil Type (Controlled Field)**

| Soil | System | Germination (%) | Emergence CV (%) | Surface water retention vs control | Survival 30 d (%) |
|---|---|---|---|---|---|
| Sandy | Invention (mat) | 88 ± 5 | 14 | +40% | 84 ± 6 |
| Sandy | Conventional biodegradable geotextile | 70 ± 7 | 28 | +18% | 62 ± 8 |
| Sandy | No mat | 52 ± 8 | 43 | 0 | 45 ± 10 |
| Loamy | Invention (mat) | 91 ± 4 | 12 | +45% | 88 ± 5 |
| Loamy | Conventional biodegradable geotextile | 72 ± 6 | 26 | +18% | 65 ± 8 |
| Loamy | No mat | 54 ± 7 | 41 | 0 | 47 ± 9 |
| Clay | Invention (mat) | 86 ± 6 | 16 | +30% | 81 ± 7 |
| Clay | Conventional biodegradable geotextile | 68 ± 8 | 30 | +15% | 60 ± 9 |
| Clay | No mat | 50 ± 9 | 45 | 0 | 42 ± 10 |

Table 8 confirms that the geotextile mat of the present disclosure provides improved germination, improved emergence uniformity, and improved survival across soil textures, with the largest relative benefits typically observed in sandy soils where nutrient mobility and leaching propensity are elevated.

In one representative laboratory realization, nutrient release kinetics and leaching reduction are evaluated in leaching columns made of PVC having a height of 30 cm and an internal diameter of 10 cm, filled with dried and sieved agricultural soil (2 mm) prepared as sandy, loamy, and clay textures. The geotextile mat of the present disclosure is applied at the soil surface in intimate contact, with nutrient loading of 12.0 ± 0.5 g/m² and seed density of 10 ± 2 g/m². A first control uses a conventional biodegradable geotextile without nutrients with granular fertilizer applied at the surface at an equivalent dose, while a second control applies granular fertilizer without a mat. Simulated precipitation is applied at 10 mm/day for days 1-7 and 5 mm/day for days 8-60, at approximately 25 °C and pH 6.5-7.2. Eluate is collected in time fractions including 0-24 h, 1-3 days, 3-7 days, 7-14 days, 14-30 days, and 30-60 days, and nutrient concentrations are determined by analytical methods such as ion chromatography or UV-Vis for nitrate and ammonium, colorimetric analysis for phosphate, and ICP or FAAS for potassium. In parallel, geotextile mass loss, tensile retention, and microscopic evidence of surface degradation are determined to support coupling between degradation and release.

In a representative realization isolating the contribution of diffusion and degradation, mat samples of 10 cm by 10 cm are incubated in an aqueous medium at pH 6.8 with controlled conductivity at 20 °C and 30 °C, using both a static regime and a renewed medium regime with replacement every 24 hours to approximate sink conditions. Nutrients released are quantified at time points including 2 h, 6 h, 24 h, 3 days, 7 days, 14 days, and 30 days, while mass loss and tensile retention are measured at corresponding times. The resulting profiles maintain evidence of a late phase governed by degradation while allowing improved estimation of intrinsic early release rates under renewed conditions.

In a representative field realization, the geotextile mat of the present disclosure is evaluated on one-square-meter plots in sandy, loamy, and clay agricultural soils, with at least three replicates per condition. The geotextile mat of the present disclosure is installed over prepared soil with 12 g/m² nutrients and 8-12 g/m² seeds and is fixed using biodegradable staples. Controls include a conventional biodegradable geotextile combined with granular fertilizer and a condition without a mat. Surface moisture in the upper 0-3 cm is monitored during days 1-14 and subsequently weekly. Germination percentage, emergence coefficient of variation, and aboveground biomass at 30 days are measured, and drainage or leachate is collected where applicable using micro-lysimetry or collection boxes. Representative performance outcomes align with the agronomic indicators reported in Table 8 and leaching reduction reported in Table 6.

In a representative surface stabilization realization under intense rainfall, the geotextile mat of the present disclosure is applied on an experimental slope of approximately 15 to 25 degrees using a loamy-sandy soil, and rainfall is simulated at 30-50 mm/h for 30 minutes and repeated three times in one week. Sediment loss, displaced seed count, and germination after 14 days are determined, and reduced surface mobilization is observed in a manner consistent with the combined confinement and moisture retention mechanisms of the mat.

The experimental evidence demonstrates that the biodegradable geotextile mat of the present disclosure provides soil-adaptive, degradation-coupled, and spatially confined nutrient release, ensuring sustained nutrient availability during the germination and early growth stages while reducing nutrient losses by leaching. The combination of geometric confinement, capillary water retention, and biphasic release linked to biodegradation produces a measurable and reproducible technical effect that is not derivable in an obvious manner from conventional biodegradable geotextiles and conventional fertilization practices.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A biodegradable geotextile structure for soil rehabilitation, seed germination and/or early plant development, comprising:
a woven textile structure comprising filament yarns of a natural fiber selected from the list consisting of: cotton fiber, kapok fiber, hemp fiber, and mixtures thereof;
wherein the woven textile structure defines a plurality of mesh openings having an opening size of from 1 to 8 mm;
at least a nutrient selected from the list consisting of: nitrogen, phosphorus, potassium, and mixtures thereof;
at least one plant seed;
wherein the at least one plant seed and the at least one nutrient are physically confined mesh openings of the woven textile fabric,
wherein the woven textile structure comprises a thickness from 0.8 to 3.5 mm and a grammage from 120 to 450 g/m²,
and wherein the biodegradable fibres are configured to undergo progressive biodegradation in soil,
such that nutrient release occurs according to a biphasic profile, comprising an initial diffusion-controlled phase followed by a degradation-controlled phase.

2. Biodegradable geotextile structure according to the previous claim wherein the plant seeds are selected from the group consisting of: Quercus spp., Pinus spp., Betula spp, or mixtures thereof.

3. Biodegradable geotextile structure according to any of the previous claims wherein the apertures of the woven mesh of the woven fabric structure ranges from 0.1 mm to 50 mm, preferably from 1 mm to 8 mm, more preferably from 2 mm to 5 mm.

4. Biodegradable geotextile structure according to any of the previous claims wherein the grammage of the geotextile ranges from 120 to 450 g/m².

5. Biodegradable geotextile structure according to any of the previous claims wherein the thickness of the geotextile ranges from 0.8 mm to 5 mm; preferably 0.5 mm to 3.5 mm.

6. Biodegradable geotextile structure according to any of the previous claims, wherein the nutrients are associated with biodegradable ionic retention components selected from a list consisting of: lignin, tannins, natural clays, zeolites or biochar, and their mixtures thereof.

7. Biodegradable geotextile structure according to any of the previous claims, wherein the nutrients the amount of nutrient ranges from 6 g/m² to 20 g/m², g/m², relative to the surface area of the geotextile; preferably 8 g/m² to 15 g/m².

8. Biodegradable geotextile structure according to any of the previous claims, wherein the nutrients the amount of seeds ranges from 2 g/m² to 50 g/m², g/m², relative to the surface area of the geotextile; preferably 5 g/m² to 30 g/m².

9. Biodegradable geotextile structure according to any of the previous claims, wherein the nutrients comprise a combination of nitrogen, phosphorus and potassium, preferably wherein nitrogen is provided as urea, phosphorus as ammonium phosphate, and potassium as potassium salts..

10. Biodegradable geotextile structure according to any of the previous claims, wherein the plant seeds comprise a combination of species selected from Quercus spp., Pinus spp. and Betula spp., such that the controlled nutrient release and moisture retention provided by the geotextile structure promote synergistic germination and homogeneous emergence of the different species.

11. Geotextile mat, sheet or roll comprising the biodegradable geotextile structure according to any of the previous claims.

12. A method for producing a biodegradable geotextile structure comprising the steps of:
weaving a fabric structure of filament yarns of natural fibers selected from the list consisting of: cotton fiber, kapok fiber, hemp fiber, and mixtures thereof;
treating the woven fabric structure with a suspension comprising a nutrient selected from the list consisting of: nitrogen, phosphorus, potassium, and mixtures thereof, and plant seeds;
drying the treated woven fabric structure such that the plant seeds and nutrients are physically confined within the mesh openings and remain confined after handling and installation.
